# EUROPEAN PATENT SPECIFICATION

(11) **EP 3 100 809 B1**
(45) Date of publication and mention of the grant of the patent: **19.09.2018**
(21) Application number: 16168604.3
(22) Date of filing: 06.05.2016
(51) Int. Cl.: B23C 3/35, G06K 9/00, B23Q 17/24, B23Q 17/20, E05B 19/00, G02B 13/00, G06K 9/20, H04N 5/225

(54) **KEY CUTTING APPARATUS**
SCHLÜSSELSCHNEIDVORRICHTUNG
APPAREIL DE COUPE DE CLÉ

(30) Priority: 04.06.2015 GB 201509700
(43) Date of publication of application: 07.12.2016
(73) Proprietor: Iconx Limited, Brighton, East Sussex BN1 1AX (GB)
(72) Inventor: Horsfall, David Anthony, Brighton, East Sussex BN1 1AX (GB); Smith, Ian Simon, Brighton, East Sussex BN1 1AX (GB)
(74) Representative: Sales, Robert Reginald

(56) References cited:
- US-A- 189 520
- US-A- 3 682 041
- US-A- 5 314 274
- US-A- 5 908 273

## Description

The present invention relates to key a key cutting apparatus according to the preamble of claim 1. An example of such an apparatus is disclosed by US 5,908,273 A.

It is a common requirement for keys to be duplicated. For example, a new lock fitted to an external door may be provided initially with a small number of keys which are then duplicated to provide sufficient keys for all users of the door. Traditionally, this requires one of the original keys to be taken to a key cutting service where an experienced operator will select a suitable key blank from an available stock of blanks, and then cut the selected blank to duplicate the original key.

This traditional service is largely manual and requires operator judgement for selection of the blank, and is vulnerable to misidentification of the required blank, and to imperfect machining. The likelihood of a duplicated key working satisfactorily may often be much less than 60%. Machines have been developed more recently to provide a partially automated key cutting service in which a machine will optically analyse the original key to choose the key blank, which is then cut in an automated process. This removes the requirement for operator skill or judgement but the success rate is nevertheless often found to be insufficient. The invention consists in an apparatus as claimed in the appended claims.

### Description

Examples of the present disclosure provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
wherein the measurement station comprises a light source operable to illuminate an original key, and a camera operable to observe an illuminated original key to obtain measurements of the original key,
the apparatus further comprising a test object which, when placed in the measurement station, allows the camera to obtain calibration measurements relating to the light source.

The test object may provide a plurality of surfaces at respective positions in the field of illumination of the light source, the illumination of each of the surfaces being visible to the camera, during use. The positions may be at respective distances from the camera. The plurality of surfaces may be parallel and planar. When the test object is placed in the measurement station, one of the surfaces may be a centreline surface at a position corresponding with the centreline of an original key placed in the measurement station. The test object may provide at least one further surface which is closer to and/or further from the camera source than the centreline surface.

The test object may comprise a plurality of stacked sheets, the sheets having apertures to expose part of any lower sheets in the stack. The camera may measure the width of a patch of illumination on each of the surfaces to measure the focus position of the light source relative to the surfaces. The light source may project a line to illuminate the measurement station during calibration, wherein the camera observes the orientation of the line to calibrate the orientation of the light source. The apparatus may be operable to adjust the focus and/or orientation of the light source according to measurements taken when the test object is illuminated.

Examples of the present disclosure also provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
wherein the measurement station provides a measurement position for an original key, and comprises a camera and a calibration member providing a gap between opaque edges which are visible, in use, by the camera,
and wherein the opaque edges have calibration features detectable in the image captured by the camera,
and wherein the orientation of the camera, relative to the calibration member, is detected in use by reference to the relative positions of the calibration features in the image.

The opaque edges may be parallel. The calibration features may be notches or prominences. The apparatus may be operable to adjust the orientation of the camera according to the detected orientation. The apparatus may be operable to move the camera, relative to the calibration member, to move the edges and/or the line of the calibration features across the field of view of the camera.

Examples of the present disclosure also provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
wherein the workstation comprises clamp jaws between which a key blank is held during cutting, and wherein at least one of the jaws comprises a groove to receive the shank of a mortice key, to define the alignment of the mortice key in the workstation.

A grooved jaw may be fixed in position relative to the workstation, and a movable jaw provided to clamp against the fixed jaw. The fixed jaw may be a lower jaw, the movable jaw being an upper jaw. The movable jaw may be generally flat and have at least one edge relieved by a chamfer or radius. The movable jaw may be mounted at a pivot, the apparatus comprising an actuator to move the movable jaw, and wherein the pivot is loose to allow the movable jaw to accommodate a range of sizes of key blank.

Examples of the present disclosure also provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
and further comprising a calibration member comprising a probe having a calibration tip, and the apparatus is operable, in use, to bring the surface of a key blank to the calibration tip to calibrate the position of the key blank relative to the cutting device by measuring a cut made on the key blank by the cutting device.

The calibration member may be maintained at a fixed calibration position, and the apparatus may further comprise drive means operable to provide relative movement between the workstation, the calibration member and the cutting device. The drive means may be operable to bring to the calibration tip a position on the surface of the key blank which is away from the edges of the cut. The position may be at a centreline of the key blank.

Examples of the present disclosure also provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
and further comprising a deburring station comprising a deburring tool, there being drive means operable to provide relative movement between the deburring tool and a key blank held in the workstation, for deburring the cut key,
and wherein the apparatus is operable to maintain a record of usage of the deburring tool and to adjust the position of the tool relative to the workstation to compensate for wear of the tool.

The apparatus may be operable to analyse the usage record to determine and/or to predict when the deburring tool is worn out.

Examples of the present disclosure also provide key cutting apparatus comprising:
a measurement station operable to measure an original key to be copied;
a workstation operable to hold a key blank to be cut as a copy of the original key measured by the measurement station;
and a cutting system operable to cut a key blank held in the workstation, in accordance with measurements made by the measurement station;
and wherein the measurement station is operable to measure the length of an original key and the cutting system is operable to cut a key blank to length, in accordance with the measured length of the original key.

The measurement station may measure the shank length of the original key.

The measurement station may detect the shoulder of an original key, and measure the blade length of the key, from the shoulder.

The measurement station may measure the tip profile of the key tip and the cutting system may be operable to reproduce the measured tip profile on the key blank after the key blank has been cut to length.

Examples of the present disclosure will now be described in more detail, by way of example only, and with reference to the accompanying drawings, in which:
Fig 1 is a schematic outline of a typical cylinder key for a cylinder lock;
Fig 2 is a schematic outline of a typical mortice key for a mortice lock;
Fig 3 is a highly schematic block diagram of key cutting apparatus according to one example of the present disclosure;
Fig 4 is a perspective view, on an enlarged scale, of a test object for use with the apparatus of Fig 3;
Fig 5 indicates images seen on the test object of Fig 4, during use;
Fig 6 illustrates further possibilities for use of the test object of Fig 4;
Fig 7 is a schematic illustration of the measurement station of the apparatus of Fig 3;
Fig 8 is a schematic illustration of an image seen by the camera of the measurement station, during use;
Fig 9 is a schematic side view of a clamp arrangement for the workstation;
Figs 10, 11 and 12 are, respectively, end, plan and side views of part of the clamp arrangement of the workstation, during use, with an upper jaw removed from Fig 11;
Fig 13 is an enlarged schematic view indicating the manner of forming a cut; and
Fig 14 illustrates the use of a calibration member in conjunction with a test cut.

### Background

The key cutting apparatus to be described herein is primarily intended for use in cutting keys for cylinder locks or mortice locks such as are in widespread use.

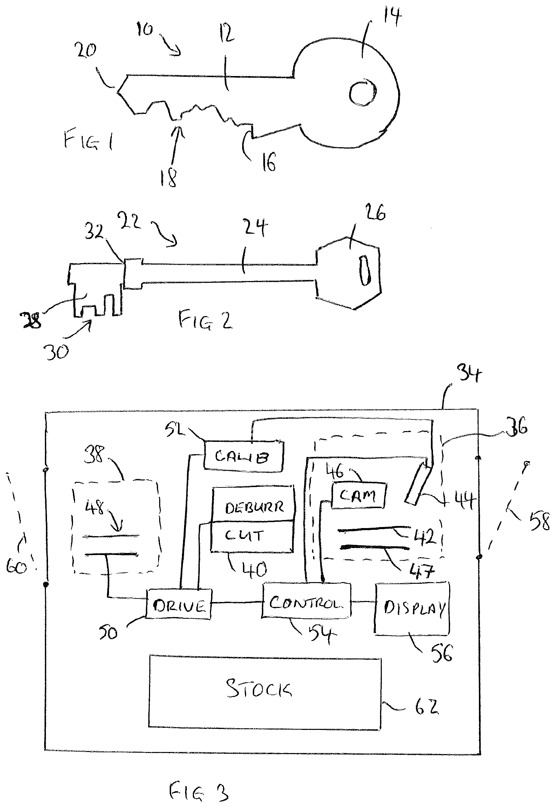

Fig 1 illustrates the outline of a typical cylinder key 10. The key 10 has an elongate blade 12 which meets a grip 14 at a shoulder 16. In use, the blade 12 is inserted into a cylinder lock (not shown), while held by means of the grip 14, and can then be turned by means of the grip 14, to operate the lock. The shoulder 16 limits the depth of penetration of the blade 12 into the lock. One edge 18 of the blade 12 is cut to the appropriate shape for operating the levers of the cylinder lock. The edge 18 must be cut so that the formations along the edge 18 are correctly positioned within the lock, when the blade 12 is fully inserted into the lock, up to the limit set by the shoulder 16. Similarly, the total length of the blade 12 must be appropriate for the corresponding lock, so that the tip 20 is positioned appropriately within the lock. The tip 20 may be required to operate a clutch mechanism or other additional security mechanism.

Fig 2 illustrates the outline of a typical mortice key 22. The key 22 has a shank 24 having a grip 26 at one end and carrying a blade 28 near the other end of the shank 24. The blade 28 has an edge 30 cut to an appropriate shape for operation of the levers of a mortice lock with which the key 22 is to be used. The edge 30 must be cut so that the formations along the edge 30 are correctly positioned within the lock, when the blade 28 is fully inserted into the lock, up to the limit set by a shoulder 32 formed on the shank 24.

### Overview of key cutting apparatus

Fig 3 illustrates, in simple block diagram form, a key cutting apparatus 34. The apparatus 34 has a measurement station indicated generally at 36 and operable, as will be described, to measure an original key to be copied. The apparatus 34 also has a workstation indicated generally at 38 and operable, as will be described, to hold a key blank to be cut as a copy of an original key measured by the measurement station 36. The apparatus 34 also has a cutting system indicated generally at 40 and operable, as will be described, to cut a key blank held in the workstation 38, in accordance with measurements made by the measurement station 36.

In this example, the measurement station 36 includes a transparent platen 42 on which an original key can be laid for measurement. A light source 44 is provided for illuminating the platen 42 during measurement. The light source 44 may be a laser. A camera 46 is provided for observing an original key when laid on the platen 42 and illuminated by the laser 44. A backlight 47 is positioned behind the platen 42 (as seen from the camera 46 and serves to create a silhouette of the original key, when viewed by the camera 46.

In this example, the workstation 38 includes a clamp at 48, in which a key blank can be held while being cut. Cutting is effected by the cutting system 40 which, in this example, includes a cutting device such as a cutting wheel (not illustrated in Fig 3) and may also include finishing tools such as a deburring wheel (not illustrated in Fig 3).

The process of cutting a key blank held in the clamp 48 is achieved by relative movement of the workstation 38 and the cutting system 40, driven by a drive arrangement 50. The drive arrangement 50 may include, for example, electric motors or other actuators, and transducers for measuring movement, such as shaft encoders.

Calibration arrangements indicated generally at 52 are provided in association with the cutting system 40, and will be described more fully below.

A control arrangement 54, which may be based around a microprocessor or other computing device, is connected to control the operation of the components of the apparatus 34, in the manner which will be described. The control arrangement 54 may also control a user display 56, which may provide feedback or instructions to a user, during use of the apparatus 34.

The control arrangement 54 may incorporate the calibration arrangements 52, but the calibration arrangements 52 are here shown and described separately, in the interests of clarity.

The measuring station 36 is accessible to a user through a door 58. The workstation 38 is accessible to a user through a door 60. The doors 58, 60 may be controlled by locks or override switches, for safety reasons.

In this example, the apparatus 34 provides storage 62 for a stock of a wide selection of key blanks of different designs and sizes.

### Outline of operation of the apparatus 34

When a user wishes to duplicate an existing key, the existing key (here called an "original key") is placed on the platen 42. The original key is then illuminated by the laser 44 and the backlight 47 and viewed by the camera 46 in order to measure the original key. This allows the control arrangement 54 to determine the appropriate key blank required, and the appropriate shape to which the key blank must be cut. The control apparatus 54 may indicate the required selection of key blank to the user, using the display 56, allowing the user to select the appropriate key blank from the stock at 62. The key blank is then placed into the workstation 38. Once the doors 58, 60 are both closed, the control arrangement 54 can initiate the cutting process in which the drive arrangement 50 causes the cutting system 40 to cut the key blank to reproduce the original key. This process is controlled by the measurements which have been taken from the original key by means of the camera 46.

In order to provide adequate accuracy in the finished copy key, various arrangements are provided for calibration within the apparatus 34. Examples of these calibration arrangements will now be described.

### Calibration of the light source (focus)

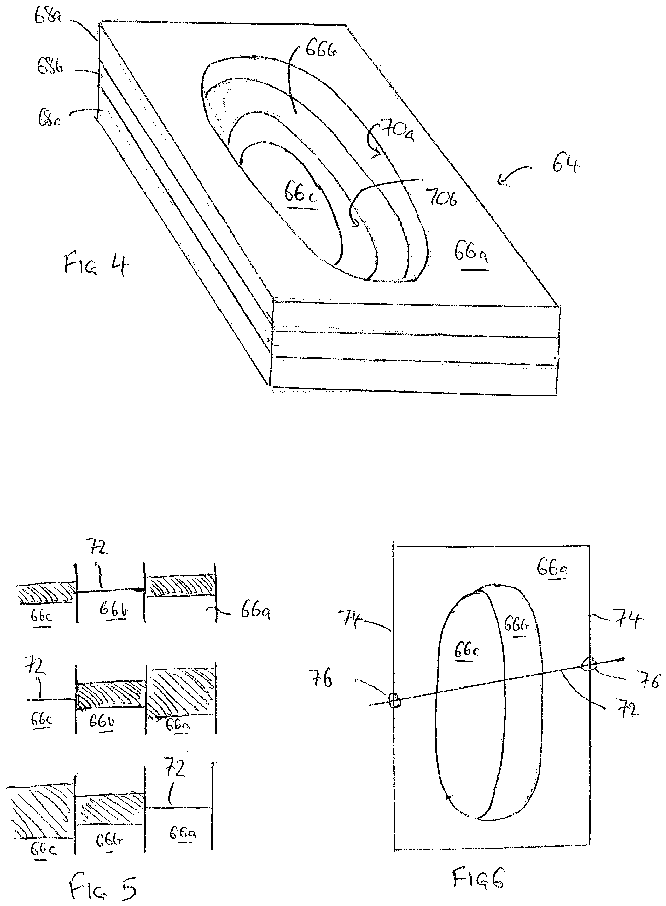

It is desirable for the light source 44 to be focused appropriately, so that an original key is illuminated by a sharp patch of light, such as a line of light which is then moved across the original key, to scan the key. This line of light is viewed by the camera 46, so that the scanning process allows the shape and size of the original key to be measured. A sharp line of light for scanning in this manner can be achieved by appropriately setting the focus of the laser 44. In order to calibrate this, a test object 64 is provided (Fig 4). When used for calibration, the test object 64 is placed on the platen 42 and illuminated by the laser 44. When placed in the measurement station 36, the test object 64 allows the camera 46 to obtain calibration measurements relating to the laser 44.

In order to achieve this, the test object 64 provides a plurality of surfaces 66a-c which will be at respective positions in the field of illumination of the laser 44. In this example, the positions are at respective distances from the camera 46. The illumination of each of the surfaces 66a-c will be visible to the camera 46, during use. In this example, the plurality of surfaces 66a-c are parallel and planar, being the parallel surfaces of a plurality of stacked sheets 68a-c. Each sheet 68a-b has an aperture 70a-b to expose part of the lower sheets 68b-c and in particular, part of the surfaces 66b-c.

This can be understood from Fig 4, in particular. The upper sheet 68a has a relatively large aperture 70a and lies on the middle sheet 68b. The upper surface 66a of the upper sheet 68a is exposed, around the aperture 70a. The middle sheet 68b has an aperture 70b which is smaller than the large aperture 70a, so that part of the upper surface 66b of the middle sheet 68b is exposed through the aperture 70a. The lower sheet 68c has no aperture, so that part of the upper surface 66c of the lower sheet 68c is exposed through the apertures 70a and 70b.

When the test object 64 is sitting on the platen 42, the three upper surfaces 66a-c are exposed to the view of the camera 46 and are positioned at three respective heights above the plane of the platen 42. One of the surfaces (the middle surface 66b, in this example) is at a position which corresponds with the typical height of the centreline of an original key placed in the measurement station 36 (on the platen 42), and is therefore termed the centreline surface. One of the further surfaces 66a is closer to the camera 46 than the centreline surface, and the other surface 66c is further from the camera 46 than the centreline surface.

Fig 5 illustrates part of the image seen by the camera 46 when the test object 64 is illuminated by a focused line 72 of light from the laser 44. The laser line 72 falls across the surfaces 66a-c but because the surfaces 66a-c are at different heights, the line 72 will not be sharply focused on all of the surfaces 66a-c. In the upper image of Fig 5, a sharp line of light is seen on the centreline surface 66b. Broad lines of light are seen on the other two surfaces 66a, 66c. This corresponds with the laser being focused at the height of the centreline surface 66b. In the middle image of Fig 5, a sharp line of light is seen on the lower surface 66c. Broader lines of light are seen on the other two surfaces 66a, 66b. This corresponds with the laser being focused at the height of the lower surface 66c. In the lower image of Fig 5, a sharp line of light is seen on the upper surface 66a. Broader lines of light are seen on the other two surfaces 66b, 66c. This corresponds with the laser being focused at the height of the upper surface 66a. The focus point of the laser 44 can therefore readily be identified by the camera 46 and the control arrangement 54, so that the calibration arrangements 52 can adjust the focus of the laser 44. In this example, it is desirable to focus the laser at the height of the centreline surface 66b, so that when an original key is subsequently scanned, scanning will be occurring at the height of the centreline of the key, which we envisage will provide greatest accuracy for the measurements.

### Calibration of the light source (orientation)

The test object 64 also allows the orientation of the laser 44 to be calibrated. This can be seen from Fig 6, in which a laser line 72 is visible on the upper surface 66a of the test object 64, and which intersects the edges 74 of the test object 64 at two positions 76. If the test object 64 is held at a known position on the platen 42, then the orientation of the laser 44 can be judged by considering the positions of the intersections 76, allowing the calibration arrangements 52 to modify the orientation of the laser 44, if required.

We envisage that the process of scanning an original key will be most accurate if the scanning line created by the laser 44 is substantially perpendicular to the length of the key being scanned.

### Camera calibration (orientation and position)

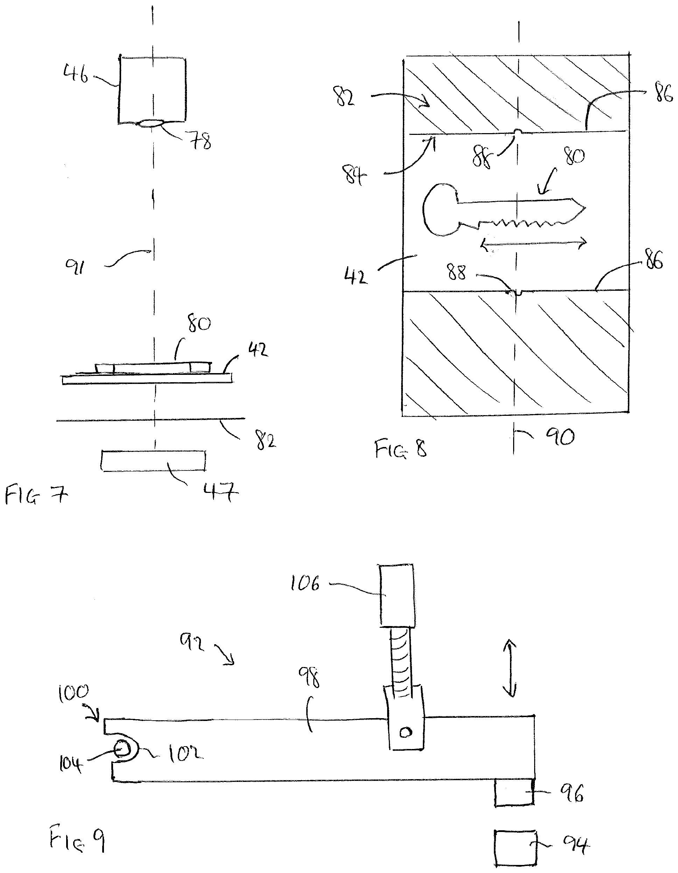

Calibration of the camera orientation can now be described with particular reference to Fig 7 and Fig 8. Fig 7 shows the measurement station 36 in more detail, with the camera 46 positioned to view the platen 42 through an optical system indicated at 78. An original key 80 is indicated on the platen 42 in Fig 7. This is illustrated at the measurement position at which an original key will normally be placed for measurement. A calibration member 82 is mounted between the backlight 47 and the platen 42. Features of the calibration member 82 can best be understood by considering Fig 8, which represents the image seen by the camera 46 when looking at the platen 42 and the original key 80. It can be seen from Fig 8 that the calibration member 82 provides a gap, generally at 84, between opaque edges 86. The gap 84 is visible to the camera 46, behind the original key 80. The original key 80, at its measurement position, is seen by the camera 46 as being located within the gap 84.

In considering Fig 8, it is to be understood that the gap 84 may be provided as an aperture in a plate, but that the only parts of the boundary of the aperture within the field of view of the camera 46 are the two, parallel lengths of the edges 86, as shown in Fig 8.

Each of the edges 86 has a calibration feature 88 detectable in the image captured by the camera 46. In this example, the calibration features 88 are notches in the otherwise straight edges 86. In another example, one or both of the calibration features 88 may be prominences. During use, the image from the camera 46 can be analysed to identify the calibration features 88 and a notional line 90, which joins the features 88. The current alignment of the camera 46 can be determined by considering the angle of the notional line 90, within the image (Fig 8). If necessary, the calibration arrangement 52 may turn the camera 46 around the viewing direction 91 (Fig 7), until the notional line 90 lies at the required angle within the image, thereby calibrating the orientation of the camera 46.

Camera alignment may also be calibrated, as follows. The calibration member 82 creates two opaque margins in the image seen by the camera 46. The position of the camera 46 may be adjusted until the margins are of equal width. The position of the camera 46 may also be adjusted until the notional line 90 is central in the field of view of the camera 46.

Thus, the field of view of the camera 46 may be adjusted in two perpendicular directions across the plane of the platen 42, and also adjusted in orientation around an axis perpendicular to the plane of the platen 42.

### Workstation (clamp arrangements)

The workstation 38 incorporates a clamp mechanism 92 illustrated schematically in Fig 9. The clamp mechanism 92 is used to hold a key blank while the key blank is being cut by the cutting system 40.

In this example, the clamp mechanism 92 includes a first jaw 94 and a second jaw 96. The jaw 94 is mounted at a fixed position within the workstation 38. The jaw 96 is mounted at one end of an arm 98. The other end of the arm 98 is pivotally mounted at a pivot 100. The pivot 100 is loose, meaning that a slot 102 on the arm 98 is over size for a pivot pin 104, so that the arm 98 is not restricted solely to pivoting movement, but can also move longitudinally, to a limited extent. This freedom allows different sizes of key blank to be accommodated conveniently, as will become apparent.

The position of the arm 98 is controlled by an actuator arrangement 106, under the control of the control arrangement 54, allowing the arm 98 to be raised or lowered, thereby closing or opening the jaws 94, 96 to clamp or release a key blank.

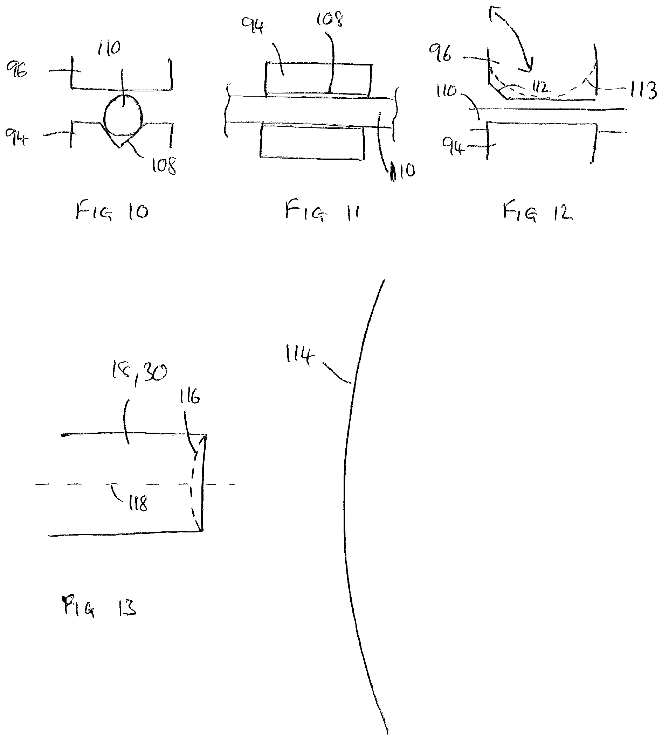

The jaw 94 has a groove 108, best seen in Fig 10 and Fig 11. During use, the groove 108 receives the shank 110 of a mortice key. The jaw 96 can then be closed against the jaw 94 by operation of the actuator 106 in order to clamp the shank 110 between the jaws 94, 96. As this occurs, the shank 110 is forced down into the groove 108 and the longitudinal alignment of the shank 110 is therefore forced to an alignment defined by the orientation of the groove 108. In this example, the groove 108 is V-shaped to allow for this action with a range of different shank diameters. In this example, only the jaw 94 has a groove 108, but a groove could also, or alternatively, be provided in the jaw 96. In this example, the lower jaw 94 is fixed; the upper jaw 96 is movable.

The loose pivot 100 further provides for accurate alignment of the shank 110 in the groove 108. This is because the looseness in the pivot 100 allows the jaw 96 to adjust its position slightly, as the jaws close, to accommodate size differences between different shanks, but nevertheless ensures that a clamping force is provided to clamp the shank 110 and to press the shank 110 into the groove 108, to create the preferred alignment, as discussed above.

Fig 12 illustrates a further feature of the upper jaw 96. A chamfer 112 is formed along that edge of the jaw 96 which is closest to the pivot 100. In another example, a radius may be formed on the jaw 96, indicated by broken line 113. We have found that the use of a chamfer 112 or radius 113 helps prevent a key blank being knocked out of position, as could happen by engagement between the shank 110 and a square edge of the jaw 96. The presence of a chamfer or radius feature, together with the looseness of the pivot 100 has been found to achieve good grip and good alignment for the shank 110.

### Calibration (position of cutting device)

Fig 13 illustrates (on an enlarged scale) an edge 18, 30 of a key blank, and part of the circumference of a cutting device 114, illustrated as an abrasive disc. Relative movement of the workstation 38 and the cutting system 40, as described above, allows the abrasive disc 114 to engage the edge 18, 30 to create a cut, indicated by a broken line 116. The surface defined by the broken line 116 will be part of the arc of a circular cylinder. That is, the surface will not be flat. However, the radius of curvature may be very high, relative to the dimensions of the edge 18, 30. We have found that the reliability of the key cutting process can be improved by calibrating the cutting system 40 by reference to the height of the centre line 118. In particular, this calibrates the cutting system 40 at the same height as the test object 64 is used to calibrate the focus of the laser 44.

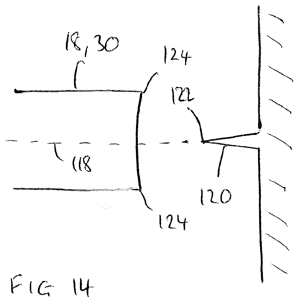

Calibration can be achieved by first making a test cut of a key blank or a test blank, in the manner described in relation to Fig 13 and then offering the surface of the test cut 116 to a calibration member in the form of a probe 120 illustrated in Fig 14. The probe 120 has a calibration tip 122 and when calibration is required, the drive arrangement 50 brings the surface 116 to the calibration tip 122. In one example, this is achieved by holding the probe 120 at a fixed calibration position, and allowing the drive arrangement 50 to provide relative movement between the workstation 38, the cutting system 40 and the calibration probe 120, so that the test cut 116 can be made by the abrasive disc 114, and then calibrated by the calibration tip 122. We have found that bringing the calibration tip 122 into contact with the test surface 116 at the centre line 118 will calibrate the apparatus at the centre line 118 and improve the reliability of the products produced. One possible explanation for this is that by calibrating at a point (at the tip 122), and using a point part way across the test surface 116, the calibration process is not vulnerable to any unpredictable aberration which may occur at the corners 124 of the edge 18, 30. Such unpredictable aberrations could occur, for example, as a result of incomplete deburring.

### Deburrinq (maintenance)

The cutting system 40 may include a deburring function, as discussed above. For example, this may be in the form of a deburring tool such as a brush or wheel (which is conventional in itself and is not illustrated separately in the accompanying drawings). The drive arrangements 50 can provide relative movement between the deburring wheel and a key blank held in the workstation 38, in order to deburr the cut key.

Deburring tools are vulnerable to wear, during use. Accordingly, in this example, the control arrangements 54 maintain a record of usage of the deburring tool. In particular, the control arrangements 54 maintain a record of the number of keys which have been cut, the size and shape of key blanks from which the keys have been cut, and other parameters, allowing the control arrangements 54 to predict the level of wear which will have occurred on the deburring tool. Initially, wear which has been identified will be used within movement algorithms to adjust the position of the deburring tool, relative to the workstation, when deburring is taking place, in order to compensate for wear of the wheel. In addition, we envisage that the control arrangement 54 will analyse the usage record to determine when the deburring tool has become worn to a sufficient extent to be considered as worn out. The control arrangement 54 may then provide an alert to allow the deburring tool to be exchanged for a new one. We envisage the control arrangement 54 predicting when the deburring tool will need to be exchanged, so that a new deburring tool will be in position before the existing deburring tool becomes unusable or ineffective.

### Scanning and cutting to length

In the arrangements described above, particularly in relation to Fig 8, it is apparent that the camera 46 captures an image from which it is possible to determine (i.e. measure) the length of the original key. In the case of a cylinder key, the image allows the blade length to be measured and allows the tip profile of the key to be identified.

In the case of a cylinder key, it is important to reproduce accurately the length of the blade 12 from the shoulder 16. The camera image allows the shoulder 16 to be identified and therefore allows the length of the blade 12 from the shoulder 16 to be measured and reproduced in the workstation 38 by cutting an oversize blank to the appropriate length. Similarly, it is important to reproduce accurately the tip profile of the key. The camera image allows the tip profile to be measured and reproduced. The ability to measure the length, and to cut to length, reduces the required range of stock 62.

### Concluding comments

Many variations and modifications can be made without departing from the scope of the present invention. In particular, many different sizes and relative sizes of the various components, arrangements and apparatus can be used.

Many different combinations of the features described above can be used.

## Claims

1. Key cutting apparatus (34) comprising:
a measurement station (36) operable to measure an original key to be copied;
a workstation (38) operable to hold a key blank to be cut as a copy of the original key measured by the measurement station (36);
and a cutting system (40) operable to cut the key blank held in the workstation (38), in accordance with measurements made by the measurement station (36);
and wherein the measurement station (36) is operable to measure the length of the original key and the tip profile of the key tip (20) of the original key;
and the cutting system (40) is operable to cut the key blank to length, in accordance with the measured length of the original key;
**characterised in that** the cutting system (40) is operable to reproduce the measured tip profile on the key blank after the key blank has been cut to length.

2. Apparatus (34) according to claim 1, wherein the measurement station (36) is operable to measure the shank length of the original key.

3. Apparatus (34) according to claim 1, wherein the measurement station (36) is operable to detect the shoulder (32) of an original key, and measure the blade length of the key, from the shoulder (32).

4. Apparatus (34) according to any of the preceding claims, wherein the measurement station (36) comprises a light source (44) operable to illuminate an original key, and a camera (46) operable to observe an illuminated original key to obtain measurements of the original key, the apparatus (34) further comprising a test object (64) which, when placed in the measurement station (36), allows the camera (46) to obtain calibration measurements relating to the light source (44).

5. Apparatus (34) according to any of the preceding claims, wherein the measurement station (36) provides a measurement position for an original key, and comprises a camera (46) and a calibration member (82) providing a gap between opaque edges (86) which are visible, in use, by the camera (46), and wherein the opaque edges (86) have calibration features (88) detectable in the image captured by the camera (46), and wherein the orientation of the camera (46), relative to the calibration member (82), is detected in use by reference to the relative positions of the calibration features (88) in the image.

6. Apparatus (34) according to any of the preceding claims, wherein the workstation (38) comprises clamp jaws (94, 96) between which a key blank is held during cutting, and wherein at least one of the jaws (94, 96) comprises a groove (108) to receive the shank (110) of a mortice key, to define the alignment of the mortice key in the workstation (38).

7. Apparatus (34) according to any of the preceding claims, further comprising a calibration member (82) comprising a probe having a calibration tip (122), wherein the apparatus (34) is operable, in use, to bring the surface of a key blank to the calibration tip (122) to calibrate the position of the key blank relative to the cutting device (114) by measuring a cut made on the key blank by the cutting device (114).

8. Apparatus (34) according to any of the preceding claims, further comprising a deburring station comprising a deburring tool, drive means operable to provide relative movement between the deburring tool and a key blank held in the workstation (38), for deburring the cut key, and wherein the apparatus (34) is operable to maintain a record of usage of the deburring tool and to adjust the position of the tool relative to the workstation (38) to compensate for wear of the tool.

## Patentansprüche

1. Schlüsselschneidvorrichtung (34), die Folgendes umfasst:
eine Messstation (36), die betreibbar ist, einen nachzumachenden Originalschlüssel zu messen;
eine Arbeitsstation (38), die betreibbar ist, einen Schlüsselrohling, der als Kopie des von der Messstation (36) gemessenen Originalschlüssels geschnitten werden soll, zu halten;
und ein Schneidsystem (40), das betreibbar ist, den in der Arbeitsstation (38) gehaltenen Schlüsselrohling in Übereinstimmung mit den von der Messstation (36) vorgenommenen Messungen zu schneiden;
und wobei die Messstation (36) betreibbar ist, die Länge des Originalschlüssels und das Spitzenprofil der Schlüsselspitze (20) des Originalschlüssels zu messen;
und wobei das Schneidsystem (40) betreibbar ist, den Schlüsselrohling in Übereinstimmung mit der gemessenen Länge des Originalschlüssels auf Länge zu schneiden;
**dadurch gekennzeichnet, dass** das Schneidsystem (40) betreibbar ist, das gemessene Spitzenprofil auf dem Schlüsselrohling zu reproduzieren, nachdem der Schlüsselrohling auf Länge geschnitten wurde.

2. Vorrichtung (34) nach Anspruch 1, wobei die Messstation (36) betreibbar ist, die Schaftlänge des Originalschlüssels zu messen.

3. Vorrichtung (34) nach Anspruch 1, wobei die Messstation (36) betreibbar ist, die Schulter (32) eines Originalschlüssels zu detektieren und die Halmlänge des Schlüssels von der Schulter (32) aus zu messen.

4. Vorrichtung (34) nach einem der vorhergehenden Ansprüche, wobei die Messstation (36) eine Lichtquelle (44), die betreibbar ist, einen Originalschlüssel zu beleuchten, und eine Kamera (46) aufweist, die betreibbar ist, einen beleuchteten Originalschlüssel zu betrachten, um Messungen von dem Originalschlüssel zu erhalten, wobei die Vorrichtung (34) ferner ein Testobjekt (64) aufweist, das es, bei Platzierung in der Messstation (36), der Kamera (46) ermöglicht, Kalibrierungsmessungen in Bezug auf die Lichtquelle (44) zu erhalten.

5. Vorrichtung (34) nach einem der vorhergehenden Ansprüche, wobei die Messstation (36) eine Messposition für einen Originalschlüssel bereitstellt und eine Kamera (46) und ein Kalibrierungselement (82) aufweist, das eine Lücke zwischen lichtundurchlässigen Kanten (86) bereitstellt, die im Gebrauch für die Kamera (46) sichtbar sind, und wobei die lichtundurchlässigen Kanten (86) Kalibrierungsmerkmale (88) aufweisen, die in dem von der Kamera (46) erfassten Bild detektierbar sind, und wobei die Ausrichtung der Kamera (46) in Bezug auf das Kalibrierungselement (82) im Gebrauch durch Bezugnahme auf die relativen Positionen der Kalibrierungsmerkmale (88) im Bild detektiert wird.

6. Vorrichtung (34) nach einem der vorhergehenden Ansprüche, wobei die Arbeitsstation (38) Klemmbacken (94, 96) umfasst, zwischen denen ein Schlüsselrohling während des Schneidens gehalten wird, und wobei mindestens eine der Backen (94, 96) eine Rille (108) zur Aufnahme des Schafts (110) eines Einsteckschlüssels umfasst, um die Ausrichtung des Einsteckschlüssels in der Arbeitsstation (38) zu definieren.

7. Vorrichtung (34) nach einem der vorhergehenden Ansprüche, die ferner ein Kalibrierungselement (82) umfasst, das eine Sonde mit einer Kalibrierungsspitze (122) umfasst, wobei die Vorrichtung (34) betreibbar ist, die Oberfläche eines Schlüsselrohlings im Gebrauch zur Kalibrierungsspitze (122) zu bringen, um die Position des Schlüsselrohlings in Bezug zur Schneidvorrichtung (114) zu kalibrieren, indem ein von der Schneidvorrichtung (114) an dem Schlüsselrohling vorgenommener Schnitt gemessen wird.

8. Vorrichtung (34) nach einem der vorhergehenden Ansprüche, die ferner eine Abgratstation mit einem Abgratwerkzeug, Antriebsmittel, die betreibbar sind, eine relative Bewegung zwischen dem Abgratwerkzeug und einem in der Arbeitsstation (38) gehaltenen Schlüsselrohling zum Abgraten des geschnittenen Schlüssels bereitzustellen, umfasst, und wobei die Vorrichtung (34) betreibbar ist, eine Aufzeichnung über die Verwendung des Abgratwerkzeugs zu führen und die Position des Werkzeugs in Bezug auf die Arbeitsstation (38) anzupassen, um die Abnutzung des Werkzeugs auszugleichen.

## Revendications

1. Appareil de coupe de clé (34) comprenant :
une station de mesure (36) pouvant être actionnée pour mesurer une clé d'origine destinée à être copiée ;
un poste de travail (38) pouvant être actionné pour maintenir une ébauche de clé à couper en tant que copie de la clé d'origine mesurée par la station de mesure (36) ;
et un système de coupe (40) pouvant être actionné pour couper l'ébauche de clé maintenue dans le poste de travail (38), conformément aux mesures effectuées par le poste de mesure (36) ;
et dans lequel la station de mesure (36) peut être actionnée pour mesurer la longueur de la clé d'origine et le profil d'extrémité de l'extrémité de clé (20) de la clé d'origine ;
et le système de coupe (40) peut être actionné pour couper l'ébauche de clé à la longueur, conformément à la longueur mesurée de la clé d'origine ;
**caractérisé en ce que** le système de coupe (40) peut être actionné pour reproduire le profil d'extrémité mesuré sur l'ébauche de clé après que l'ébauche de clé a été coupée à longueur.

2. Appareil (34) selon la revendication 1, dans lequel la station de mesure (36) peut être actionnée pour mesurer la longueur de tige de la clé d'origine.

3. Appareil (34) selon la revendication 1, dans lequel la station de mesure (36) peut être actionnée pour détecter l'épaulement (32) d'une clé d'origine, et mesurer la longueur de lame de la clé, à partir de l'épaulement (32).

4. Appareil (34) selon l'une quelconque des revendications précédentes, dans lequel la station de mesure (36) comprend une source de lumière (44) pouvant être actionnée pour éclairer une clé d'origine, et une caméra (46) pouvant être actionnée pour observer une clé d'origine éclairée pour obtenir des mesures de la clé d'origine, l'appareil (34) comprenant en outre un objet de test (64) qui, lorsqu'il est placé dans la station de mesure (36), permet à la caméra (46) d'obtenir des mesures d'étalonnage relatives à la source de lumière.

5. Appareil (34) selon l'une quelconque des revendications précédentes, dans lequel la station de mesure (36) fournit une position de mesure pour une clé d'origine, et comprend une caméra (46) et un élément d'étalonnage (82) fournissant un espace entre les bords opaques (86) qui sont visibles, en cours d'utilisation, par la caméra (46), et dans lequel les bords opaques (86) ont des caractéristiques d'étalonnage (88) détectables dans l'image capturée par la caméra (46), et dans lequel l'orientation de la caméra (46), par rapport à l'élément d'étalonnage (82), est détectée en cours d'utilisation en référence aux positions relatives des caractéristiques d'étalonnage (88) dans l'image.

6. Appareil (34) selon l'une quelconque des revendications précédentes, dans lequel le poste de travail (38) comprend des mâchoires de serrage (94, 96) entre lesquelles une ébauche de clé est maintenue pendant la coupe, et dans lequel au moins l'une des mâchoires (94, 96) comprend une rainure (108) pour recevoir la tige (110) d'une clé de mortaise, pour définir l'alignement de la clé de mortaise dans le poste de travail (38).

7. Appareil (34) selon l'une quelconque des revendications précédentes, comprenant en outre un élément d'étalonnage (82) comprenant une sonde ayant une pointe d'étalonnage (122), dans lequel l'appareil (34) peut être actionné, en cours d'utilisation, pour amener la surface d'une ébauche de clé sur la pointe d'étalonnage (122) pour étalonner la position de l'ébauche de clé par rapport au dispositif de coupe (114) en mesurant une coupe effectuée sur l'ébauche de clé par le dispositif de coupe (114).

8. Appareil (34) selon l'une quelconque des revendications précédentes, comprenant en outre une station d'ébavurage comprenant un outil d'ébavurage, des moyens d'entraînement pouvant être actionnés pour fournir un mouvement relatif entre l'outil d'ébavurage et une ébauche de clé maintenue dans le poste de travail (38), pour ébavurer la clé coupée, et dans lequel l'appareil (34) peut être actionné pour maintenir un enregistrement de l'utilisation de l'outil d'ébavurage et pour ajuster la position de l'outil par rapport au poste de travail (38) pour compenser l'usure de l'outil.
